# EUROPEAN PATENT APPLICATION

(11) **EP 4 506 905 A1**
(43) Date of publication of application: **12.02.2025**
(21) Application number: 24189147.2
(22) Date of filing: 17.07.2024
(51) Int. Cl.: G06V 10/82, G06V 20/56

(54) **IMAGE PROCESSING METHOD AND APPARATUS, AND MODEL TRAINING METHOD AND APPARATUS**

(30) Priority: 11.08.2023 CN 202311014559
(71) Applicant: Robert Bosch GmbH, 70442 Stuttgart (DE)
(72) Inventor: ZAPF, Marc Patrick, 72770 Reutlingen (DE); WANG, Wenfu, Shanghai, 200335 (CN); WANG, Leichen, Shanghai, 200335 (CN); LI, Xinrun, Shanghai, 200335 (CN)

(57) **Abstract**

An image processing method is provided, comprising: obtaining a forward view of a vehicle, wherein the forward view at least shows an area in front of the vehicle; obtaining parameters of a camera used to capture the forward view, the parameters including extrinsic parameters of the camera; and inputting the forward view and the camera parameters into a neural network model to obtain a semantically segmented top-down view. Thus, an end-to-end method is provided, which avoids distortions that may occur during the transformation of features from the forward view to features in the top-down view.

## Description

### Technical Field

The present disclosure relates to the field of image processing, and more particularly to image processing for intelligent vehicles.

### Prior Art

As part of image processing technology, image perception technology can be used in the field of autonomous driving to perceive the surrounding environment of a vehicle, thereby serving one or more vehicles to provide a safe driving environment. Semantic segmentation can be used to identify targets in the road ahead of the vehicle, thereby facilitating the provision of driving assistance to the user or facilitating the decision-making regarding the driving path in autonomous driving. For example, semantic segmentation can be used to detect free space in the road, i.e., space where the vehicle can travel without collision, thereby facilitating the determination of the vehicle's subsequent driving path.

Since vehicles travel on real-world roads, it is usually desirable to obtain target-related information in the real-world coordinate system. Therefore, during the process of performing semantic segmentation on images to identify targets in the road, it is desirable to provide target information in the real-world coordinate system rather than in the vehicle's own coordinate system.

Currently, to obtain target information in the real-world coordinate system, one method requires first obtaining target information in a vehicle-end image (an image from the vehicle's forward perspective, referred to as a forward view), and then using Inverse Perspective Mapping (IPM) to transform it to obtain target information in a top-down view (also known as a bird's-eye view); another method uses the camera's extrinsic parameters to project image features from the forward view to the top-down view. However, improved methods are still desired.

### Summary of the Invention

It is desirable to provide an improved image processing method and apparatus that can perform semantic segmentation on targets in images to obtain target information in the real-world coordinate system based on the forward view, while minimizing distortion to ensure traffic safety.

According to one aspect, an image processing method is provided, including: obtaining a forward view of a vehicle, wherein the forward view at least shows an area in front of the vehicle; obtaining parameters of a camera used to capture the forward view, the parameters including extrinsic parameters of the camera; and inputting the forward view and the camera parameters into a neural network model to obtain a semantically segmented top-down view.

According to another aspect, a method for training a neural network model is provided, wherein the neural network model receives a forward view of a vehicle and parameters of a camera used to capture the forward view to output a semantically segmented top-down view for a target, wherein the forward view at least shows an area in front of the vehicle, and the parameters include extrinsic parameters of the camera. The training method includes: obtaining a training forward view, training parameters of the camera corresponding to the training forward view, and a semantically segmented top-down training ground truth view for the target in the training forward view; and training the neural network model based on the training forward view, the camera's training parameters, and the training ground truth view.

According to another aspect, an image processing apparatus is provided, including: an obtaining unit configured to obtain a forward view of a vehicle and parameters of a camera used to capture the forward view, wherein the forward view at least shows an area in front of the vehicle, and the parameters include extrinsic parameters of the camera; and a processing unit configured to input the forward view and the camera's parameters into a neural network model to obtain a semantically segmented top-down view.

According to another aspect, an apparatus for training a neural network model is provided, wherein the neural network model receives a forward view of a vehicle and parameters of a camera used to capture the forward view to output a semantically segmented top-down view for a target, wherein the forward view at least shows an area in front of the vehicle, and the parameters include the extrinsic parameters of the camera. The training apparatus includes: an obtaining unit configured to obtain a training forward view, training parameters of the camera corresponding to the training forward view, and a semantically segmented top-down training ground truth view for the target in the training forward view; and a training unit configured to train the neural network model based on the training forward view, the camera's training parameters, and the training ground truth view.

According to another aspect, a computer-readable medium is provided, storing computer program units that, when executed by a processor or computer, cause the processor or computer to perform the image processing method according to various examples of the present disclosure or the neural network model training method according to various examples of the present disclosure.

According to various examples of the present disclosure, by training a neural network model to learn the correspondence between each pixel in the forward view of a vehicle and the top-down view, the present disclosure provides an end-to-end image processing method. For the trained neural network model, inputting a forward view of a vehicle can directly output the semantic segmentation result for the target in the real-world coordinate system, specifically outputting the semantic segmentation result for the target in the top-down view. Thus, it avoids the distortion that occurs during the process of transforming features in the forward view to features in the top-down view, which is caused by the plane assumption in the IPM transformation. Specifically, the IPM transformation is a nonlinear transformation between two planes, which can cause distortion for objects on the ground. With the neural network model of the present disclosure, pixel-by-pixel transformation between the forward view and the top-down view can be learned, avoiding distortion and directly outputting a semantically segmented view.

According to one example of various aspects of the present disclosure, the neural network model is trained as follows: obtaining variation data of the camera's extrinsic parameters; obtaining a training forward view, training parameters of the camera corresponding to the training forward view, and a semantically segmented top-down training ground truth view for the target in the training forward view; adjusting the training forward view, the camera's training parameters, and the training ground truth view based on the variation data; and training the neural network model based on the adjusted training forward view, the training parameters, and the training ground truth view. In a further example, the variation data of the camera's extrinsic parameters is obtained as follows: obtaining vibration distribution data by fitting distribution to vibration data representing the camera's vibration; selecting specific vibration data of the camera based on the vibration distribution data; and determining the variation data of the camera's extrinsic parameters based on the specific vibration data of the camera.

Thus, the variation data of the camera's extrinsic parameters, especially the variation data caused by the camera's vibration, is introduced during the training of the neural network model. By introducing the variation data of the camera's extrinsic parameters, the trained neural network model considers the variation of the extrinsic parameters, providing a neural network model aware of the extrinsic parameter variations, thereby obtaining more realistic semantic segmentation results, improving the transformation accuracy from the forward view to the real-world coordinate system due to the variation of the camera's extrinsic parameters, and enhancing the robustness of the model.

### Description of Accompanying Drawings

In the drawings, the examples are illustrated by way of example rather than by way of limitation, and like reference numerals in the drawings denote like elements.
FIG. 1 illustrates an example of the semantic segmentation result of free space;
FIG. 2 illustrates a scene of performing semantic segmentation of an image using a neural network model according to one example of the present disclosure;
FIG. 3 illustrates a flowchart of an image processing method according to one example of the present disclosure;
FIG. 4 illustrates a scene of training a neural network model according to one example of the present disclosure;
FIG. 5 illustrates a flowchart of a training method for a neural network model according to one example of the present disclosure;
FIG. 6 illustrates a process of obtaining training ground truth views for training a neural network model according to one example of the present disclosure;
FIG. 7 illustrates a block diagram of an image processing apparatus according to one example of the present disclosure; and
FIG. 8 illustrates a block diagram of a training apparatus according to one example of the present disclosure.

The various aspects and features of the examples of the present disclosure are described with reference to the above drawings. The above drawings are merely illustrative and not restrictive. In addition, not all portions of the device according to the examples of the present disclosure in the accompanying drawings above are shown with reference numerals, and only the relevant components are shown in some accompanying drawings. This does not limit the various portions merely to that shown in the accompanying drawings of the Specification.

### Specific Embodiments

For a vehicle, on one hand, a forward view of the vehicle can be obtained by a camera installed at the vehicle end, which is a view facing forward in the direction of the vehicle's travel, showing the road conditions ahead of the vehicle. On the other hand, a forward view of the vehicle can also be obtained by a camera installed roadside (e.g., on a roadside traffic pole), which is a view facing forward in the direction of the vehicle's travel from the perspective of the roadside camera, and it similarly shows the road conditions ahead of the vehicle. Whether the forward view is obtained by the vehicle-end camera or the roadside camera, it is desirable to convert it into a real-world coordinate system. This facilitates displaying the results of semantic segmentation of targets in the view within the real-world coordinate system, making it easier for users to understand and utilize the target information.

The following description will reference vehicles, but it should be understood by those skilled in the art that the various examples of the present disclosure are not limited to the field of vehicles and can be applied to any type of transportation means with similar needs, such as ships. Furthermore, the term "camera" mentioned in the following examples, unless specifically stated otherwise, encompasses any type of camera installed at the vehicle (transportation means) end and roadside.

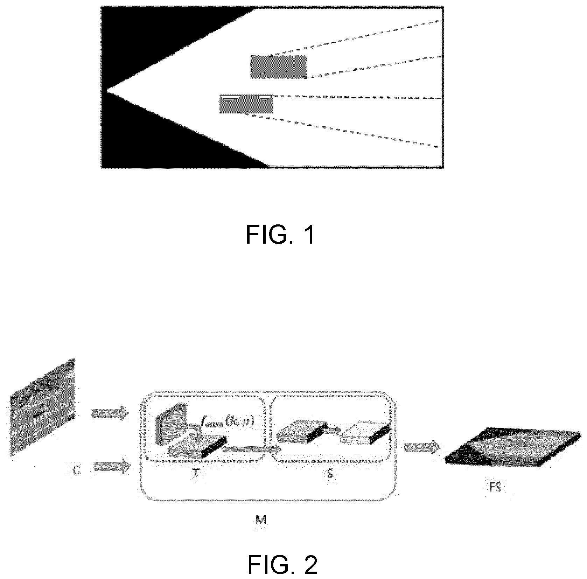

The targets for semantic segmentation can be any type of target of interest to the user, such as vehicles on the road ahead during the vehicle's travel, or free space on the road ahead during the vehicle's travel where the vehicle can travel without collision. The following will describe various examples of the present disclosure with reference to free space, but this is not limiting. FIG. 1 shows an example of the semantic segmentation result of free space. In the figure, the white areas represent the road, two gray squares represent vehicles as traffic participants, and the black areas represent regions outside the camera's field of view. Additionally, each vehicle will make part of the road invisible to the camera, marked by dashed lines in the figure. For each vehicle, the area between the two dashed lines is the occluded (invisible) area. The space on the road that is not marked with vehicles and occluded areas is the free space where the vehicle can travel. Areas other than the free space are non-free space.

Free space can serve as a reference for vehicle travel, helping to plan subsequent travel paths. Free space detection can be performed through image perception and semantic segmentation. Typically, free space information can first be obtained in the forward view captured by the camera and then projected into the real-world coordinate system, i.e., transformed into a top-down view. On one hand, this can be achieved through IPM transformation, but as mentioned earlier, this introduces distortion, which cannot provide accurate free space information. On the other hand, the projection can be performed using the extrinsic parameters of the camera, but this only roughly projects image features without considering the camera's vibration. In practice, the camera may vibrate with its installation position during image capture, causing changes in its extrinsic parameters. Using fixed extrinsic parameters makes it difficult to obtain accurate projections, which in turn affects the accuracy of the obtained free space information.

According to various examples of the present disclosure, an end-to-end neural network model is introduced, which learns the correspondence between the vehicle's forward view and the top-down view, especially the correspondence between their respective pixels. By inputting the vehicle's forward view, the semantic segmentation result of the free space in the top-down view in the real-world coordinate system can be output. Thus, this avoids the distortion caused by the plane assumption in the inverse perspective transformation when transforming features from the forward view to the top-down view and allows for accurate projection, thereby obtaining accurate free space information.

Specifically, the neural network model receives the vehicle's forward view and the parameters of the camera that captured the forward view (especially the extrinsic parameters) and outputs the top-down view (i.e., the view in the real-world coordinate system containing free space information) with semantic segmentation performed for the free space. The neural network model is a trained neural network model that has learned the correspondence between the vehicle's forward view and the top-down view. In one example, the neural network model at least includes a transformer and a semantic segmenter. The transformer is used to transform the features in the forward view into features in the top-down view for the vehicle based on the camera's parameters. The semantic segmenter is used to perform semantic segmentation on the top-down view based on its features to obtain free space information.

FIG. 2 illustrates a scene of performing semantic segmentation of an image using a neural network model according to one example of the present disclosure. As shown in FIG. 2, the forward view of the vehicle and the parameters C of the camera capturing this forward view are input into the neural network model M. The forward view of the vehicle can be captured by a camera mounted on a traffic pole. The parameters C of the camera at least include the extrinsic parameters p of the camera and may also include the intrinsic parameters k of the camera. The output of the neural network model M is a top-down view FS that shows the semantic segmentation results for free space. The neural network model can be a deep neural network model.

In this neural network model, features in the forward view are extracted, and the camera parameters are transformed into a camera parameter vector. Based on this camera parameter vector, the features in the forward view can be transformed into features in the top-down view for the vehicle. In one example, a function f_{cam}(k, p) is obtained based on the camera parameter vector to perform the transformation from the forward view to the top-down view. The neural network model can include a multilayer perceptron, which can input the camera parameters into the multilayer perceptron to transform the camera parameters into a camera parameter vector.

In one example, as shown in FIG. 2, the neural network model M includes a transformer T and a semantic segmenter S. The transformer T can transform the features in the forward view into features in the top-down view based on the aforementioned function. It is also expected that the transformer performs operations such as feature extraction from the forward view and transformation of the camera parameters. The semantic segmenter S further performs semantic segmentation based on the features in the top-down view (i.e., the view in the real-world coordinate system) to obtain the semantic segmentation results for free space FS. Subsequently, the model M outputs the semantic segmentation results FS.

Using the aforementioned neural network model, no plane assumptions are required; it only needs to learn the correspondence between the forward view and the top-down view (especially the correspondence between individual pixels) through model training. This neural network model avoids distortion and achieves end-to-end semantic segmentation of free space, obtaining accurate and real-world-compliant semantic segmentation results for free space.

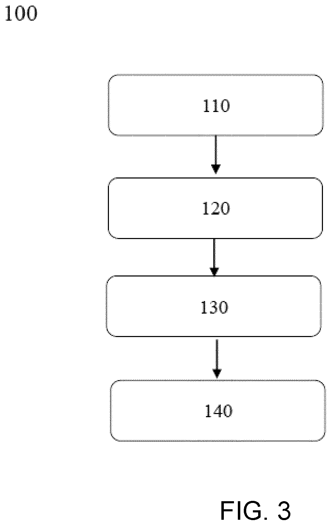

FIG. 3 illustrates a flowchart of an image processing method 100 according to one example of the present disclosure. According to the image processing method 100 shown in FIG. 3, in step 110, the forward view of the vehicle is obtained, which at least shows the area in front of the vehicle; in step 120, the parameters of the camera used to capture the forward view are obtained, which at least include the extrinsic parameters of the camera, and it is also expected that the parameters include the intrinsic parameters of the camera; in step 130, the forward view and the camera parameters are input into the neural network model described in conjunction with FIG. 2 to obtain a semantically segmented top-down view for free space, i.e., a view in the real-world coordinate system that includes the semantic segmentation results for free space; in step 140, the semantically segmented top-down view of the vehicle is output.

As mentioned above, the camera may vibrate with its installation position during image capture, causing changes in its extrinsic parameters. Using fixed extrinsic parameters makes it difficult to obtain accurate projections, which in turn affects the accuracy of the obtained free space information.

Thus, the variation data of the camera's extrinsic parameters according to an example of the present disclosure, especially the variation data caused by the camera's vibration, is introduced during the training of the neural network model. By introducing the variation data of the camera's extrinsic parameters, the trained neural network model considers the changes in the extrinsic parameters, thereby obtaining more accurate and realistic semantic segmentation results.

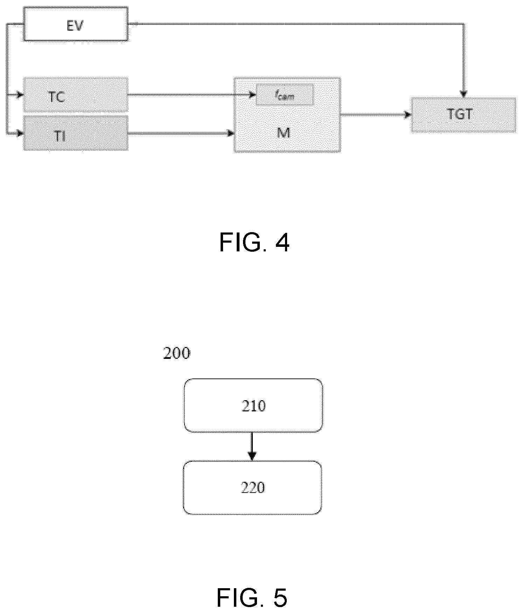

In one example, the neural network model is trained as follows: obtaining the variation data of the camera's extrinsic parameters; obtaining training forward views for training the neural network model, the training parameters of the camera corresponding to the training forward views (including the camera's extrinsic parameters and optionally the intrinsic parameters), and the semantically segmented top-down training ground truth views for free space; adjusting the training forward views, the camera's training parameters, and the semantically segmented top-down training ground truth views based on the variation data of the camera's extrinsic parameters; and training the neural network model shown in FIG. 2 using the adjusted training forward views, training parameters, and training ground truth views. The training method of the neural network model according to an example of the present invention will be described in detail below with reference to FIGS. 4-6.

FIG. 4 illustrates a scene of training a neural network model according to one example of the present disclosure. As shown in FIG. 4, the variation data EV of the camera's extrinsic parameters obtained is applied to the training forward view Tl for training the neural network model M and the parameters of the camera corresponding to this training forward view (referred to herein as the camera's training parameters TC to distinguish from the parameters involved in the model application). Additionally, the variation data EV of the camera's extrinsic parameters is also applied to the ground truth used for training the neural network model M (i.e., the semantically segmented top-down training ground truth view TGT corresponding to the training forward view). The training forward view, the camera's training parameters, and the semantically segmented top-down training ground truth view (ground truth) are adjusted based on the variation data EV of the extrinsic parameters, so that the adjusted training forward view, the camera's training parameters, and the training ground truth view correspond to the changed camera extrinsic parameters. The neural network model M is then trained based on the adjusted training forward view, the camera's training parameters, and the semantically segmented top-down training ground truth view.

In one example, the variation data EV of the camera's extrinsic parameters corresponds to specific vibration data selected from the vibration distribution data obtained by fitting the vibration data representing the camera's vibration, and is determined based on this specific vibration data. It is also conceivable to directly fit the distribution of the variation of the camera's extrinsic parameters and directly select specific variation data from the distribution data representing the variation of the camera's extrinsic parameters for introduction into the training of the neural network model M.

In one example, the transformation matrix relative to the calibrated extrinsic parameters of the camera after the vibration can be determined based on the obtained variation data of the extrinsic parameters, and then the training forward view, the camera's training parameters, and the training ground truth view are adjusted based on this transformation matrix.

Although a scenario for training a neural network model is described with reference to FIG. 4, this is not limiting. In some examples, it is only necessary for the neural network model to be trained to achieve end-to-end free space semantic segmentation to obtain accurate real-world free space semantic segmentation results.

FIG. 5 shows a flowchart of a training method 200 for a neural network model according to one example of the present disclosure. The neural network model can be the neural network model described with reference to FIG. 2. According to the training method 200, in step 210, the training forward view, the camera's training parameters corresponding to the training forward view, and the semantically segmented ground truth view for free space in the real-world coordinate system of the training forward view, i.e., the semantically segmented top-down training ground truth view, are obtained. In step 220, the neural network model is trained based on the training forward view, the camera's training parameters, and the semantically segmented ground truth view for free space in the real-world coordinate system.

In one example, as described with reference to FIG. 4 above, the training method may further include obtaining the variation data of the camera's extrinsic parameters; adjusting the obtained training forward view, the camera's training parameters, and the semantically segmented top-down training ground truth view based on the variation data; and using the adjusted training forward view, training parameters, and training ground truth view to train the neural network model.

In one example, the variation data of the camera's extrinsic parameters can be obtained as follows: obtaining vibration distribution data by fitting distribution to vibration data representing the camera's vibration; selecting specific vibration data of the camera based on the vibration distribution data; and determining the variation data of the camera's extrinsic parameters based on the specific vibration data of the camera.

The vibration distribution data of the camera can be obtained by acquiring the vibration data representing the camera's vibration from an inertial sensor and fitting the distribution of this vibration data. The inertial sensor is set at any position that can vibrate together with the camera, for example, directly set on the camera.

Although the training method of the neural network model is described with reference to the above steps 210-220, this is not limiting, and it covers various embodiments of the training method of the neural network model according to the present disclosure. For example, in step 210, the training forward view, the camera's training parameters corresponding to the training forward view, and the semantically segmented ground truth view for free space in the real-world coordinate system of the training forward view can be obtained in various different ways.

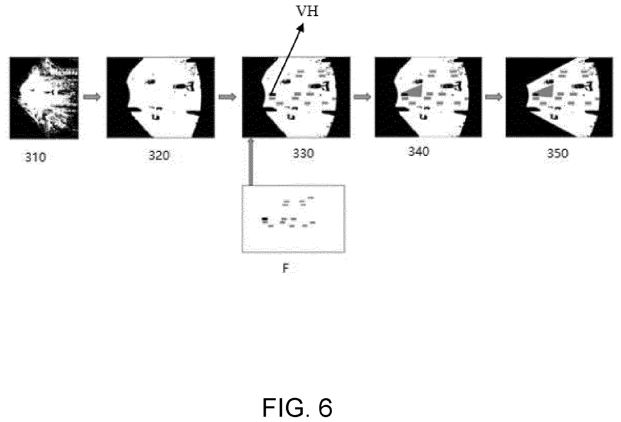

In one example, FIG. 6 shows the process of obtaining the training ground truth view for training the neural network model. Training a neural network model (especially a deep neural network model) requires a large amount of labeled data. The process shown in FIG. 6 can relatively easily obtain a large amount of labeled training data.

As shown in FIG. 6, at step 310, multiple frames of images including sparse point cloud data from a radar sensor (such as a LiDAR sensor) are stacked to obtain a superimposed view including dense point cloud data, with the LiDAR sensor being non-repetitively scanned. By stacking multiple frames of images, moving targets on the road surface (such as moving vehicles) can be removed. Subsequently, at step 320, by segmenting the superimposed view including the dense point cloud data, a road surface view showing the road surface can be obtained. There may be holes in the area representing the road surface in the segmented road surface view. It is expected to use image processing means to fill these holes to improve training reliability.

After obtaining the road surface view according to the above steps, markings for targets and non-targets can be incorporated therein. When the target is free space, markings for free space and non-free space can be incorporated into the road surface view. The markings for non-free space include: markings for foreground objects (such as vehicles) and/or markings for occlusion areas corresponding to the foreground objects. The foreground objects include non-free space objects (such as vehicles) superimposed or stitched in the road surface view and non-free space objects originally shown in the road surface view (such as barriers or flower beds originally shown in the road surface view). Specifically, the markings for non-free space may include not only the markings for the foreground objects (such as vehicles) superimposed or stitched in the road surface view and the occlusion areas corresponding to the foreground objects, but also the markings for the foreground objects originally present in the road surface view (such as barriers or flower beds) and the occlusion areas corresponding to the originally present foreground objects. For example, steps 330 and 340 can be included. At step 330, in the segmented road surface view, the marked target areas representing traffic participants (such as vehicles) are superimposed or stitched. These marked areas can be applied to each area in a certain frame forward view used for model training. The markings can be obtained using manual marking or automatic clustering methods. The marked target areas are displayed in the frame image F and can be added to the view showing the road surface. At step 340, the areas that are not visible to radar measurements, i.e., the occlusion areas, can also be marked in the road surface view, for example, areas that are not visible due to the occlusion of the radar field of view by vehicles. Specifically, in the view at step 340, the area that is not visible due to the occlusion by the vehicle VH is marked. This is merely illustrative and markings can also be made for other vehicles or objects. After marking the non-targets (such as non-free space), the remaining parts are the targets (free space). At step 350, the parts outside the camera's field of view are removed, leaving only the parts within the camera's field of view. Thus, a labeled ground truth view for training the neural network model can be obtained.

Methods and scenarios according to various examples of the present disclosure have been described with reference to FIGS. 1-6. Those skilled in the art should understand that this is not limiting, and various method steps can be arbitrarily combined/changed/split, etc., as long as the technical effects of the present disclosure can be achieved.

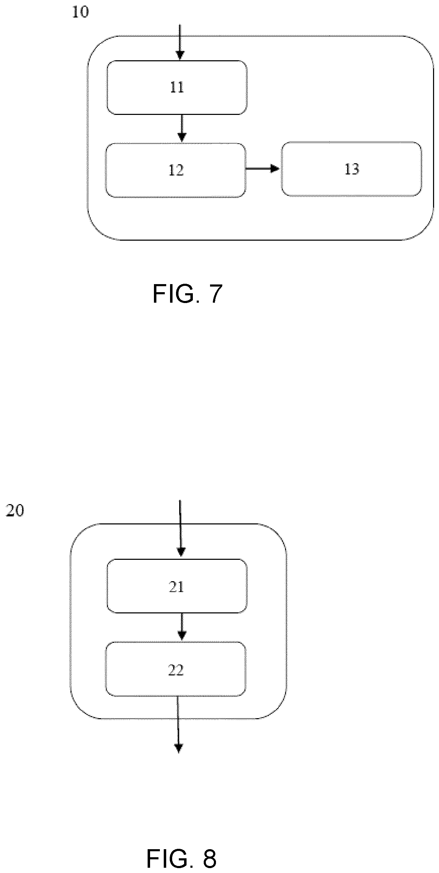

FIG. 7 illustrates a block diagram of an image processing apparatus 10 according to one example of the present disclosure. As shown in FIG. 7, the image processing device 10 includes an obtaining unit 11, a processing unit 12, and an output unit 13.

The obtaining unit 11 obtains a forward view of a vehicle and parameters of a camera used to capture the forward view, wherein the forward view at least shows an area in front of the vehicle, and the parameters include extrinsic parameters of the camera. The processing unit 12 inputs the forward view and the camera's parameters into a neural network model to obtain a semantically segmented top-down view. The neural network model can be pre-stored in the image processing device, the neural network model comprises a transformer and a semantic segmenter, the transformer being configured to transform features in the forward view into features in the top-down view of the vehicle based on the camera parameters, and the semantic segmenter being configured to perform semantic segmentation on the target based on the features in the top-down view. The output unit 13 outputs the semantically segmented top-down view of the vehicle.

In one example, the neural network model further includes a multilayer perceptron, which is used to transform the camera's parameters into a camera parameter vector. The transformer transforms features in the forward view into features in the top-down view of the vehicle based on the camera parameter vector.

FIG. 8 illustrates a block diagram of a training apparatus 20 for a neural network model according to one example of the present disclosure. The training apparatus 20 at least includes an obtaining unit 21 and a training unit 22. The obtaining unit 21 obtains training forward views, training parameters of the camera corresponding to the training forward views, and semantically segmented top-down training ground truth views of the target corresponding to the training forward views. The training unit 22 trains the neural network model based on the training forward views, the training parameters of the camera, and the training ground truth views.

In one example, the obtaining unit 21 also obtains the variation data of the camera's extrinsic parameters and adjusts the training forward view, the camera's training parameters, and the training ground truth view based on the variation data. The training unit 22 trains the neural network model based on the adjusted training forward view, the training parameters, and the training ground truth view.

In one example, the obtaining unit 21 obtains the variation data of the camera's extrinsic parameters as follows: obtaining vibration distribution data by fitting distribution to vibration data representing the camera's vibration; selecting specific vibration data of the camera based on the vibration distribution data; and determining the variation data of the camera's extrinsic parameters based on the specific vibration data of the camera.

The structures and functions of the image processing device and the training device have been described with reference to FIGS. 7 and 8. This is not limiting and does not exclude that the image processing device and the training device may also include other units. For example, the training device may also include an output unit for outputting the trained neural network model. Furthermore, although the steps of the method have not been described in detail with reference to which units of the image processing device and the training device perform them, it is conceivable that any unit of the image processing device and the training device can perform the corresponding steps of the method. This is not limited here but covers various situations.

The functions of the image processing method and device, as well as the training method and device for the neural network of the present disclosure, can be implemented by software or corresponding hardware, or by a processor to implement the functions of the various units described above. For example, the processor can read computer programs stored in memory and run these computer programs to implement the functions of the various units described above. In an example, the above device of the present disclosure may also be implemented by a memory and a processor.

It should be understood that the method according to the various examples of the present disclosure can be achieved by computer programs/software. These software programs can be loaded into the working memory of the processor and, when executed, perform the methods according to the various examples of the present disclosure.

It is understood that the methods and devices according to the present disclosure can be executed by any device with processing capabilities and can also be executed at a remote location. The exemplary examples of the present disclosure cover both: Creating/using the computer programs/software of the present disclosure from the beginning, and updating existing programs/software to use the computer programs/software of the present disclosure.

According to another example of the present disclosure, a computer program product is provided, such as a machine (e.g., computer) readable medium like a CD-ROM, which includes computer program code that, when executed, causes the computer or processor to perform the methods according to the various examples of the present disclosure. The machine-readable medium can be, for example, an optical storage medium or solid-state medium supplied with or as part of other hardware.

According to another example of the present disclosure, a system for packing is provided, which includes a 3D camera set above the packing container and the device according to the various examples of the present disclosure.

The above description has been given for specific examples of the present disclosure. Other examples are within the scope of the appended Claims. In some cases, actions or steps described in the Claims can be performed in a different order than that of the examples and still achieve the desired results. Additionally, the processes depicted in the drawings do not necessarily require specific or continuous sequences to achieve the desired results. In some examples, multitasking and parallel processing are also possible or advantageous.

The present disclosure has been described with reference to specific examples, and those skilled in the art should understand that various implementations of the technical solutions of the present disclosure can be made without departing from the spirit and basic features of the present disclosure. Specific examples are merely illustrative and not limiting. Additionally, these examples can be combined in any way to achieve the purposes of the present disclosure. The scope of protection of the present disclosure is defined by the appended claims.
The term "comprising" in the specification and claims does not exclude the presence of other elements or steps, and the expressions "first," "second," and the order of the steps mentioned and shown in the figures do not limit their sequence or quantity. The functions of the various elements described in the specification or recited in the claims can also be separated or combined and implemented by corresponding multiple elements or a single element.

## Claims

1. An image processing method, comprising:
obtaining a forward view of a vehicle, wherein the forward view at least shows an area in front of the vehicle;
obtaining parameters of a camera used to capture the forward view, wherein the parameters include extrinsic parameters of the camera;
inputting the forward view and the camera parameters into a neural network model to obtain a semantically segmented top-down view.

2. The image processing method according to Claim 1, wherein the neural network model comprises a transformer and a semantic segmenter, the transformer being configured to transform features in the forward view into features in the top-down view of the vehicle based on the camera parameters, and the semantic segmenter being configured to perform semantic segmentation on a target based on the features in the top-down view.

3. The image processing method according to Claim 1, further comprising:
outputting the semantically segmented top-down view of the vehicle.

4. The image processing method according to Claim 1, wherein the camera parameters further comprise intrinsic parameters of the camera.

5. The image processing method according to Claim 1, wherein the neural network model further comprises a multilayer perceptron configured to transform the camera parameters into a camera parameter vector,
wherein the transformer transforms features in the forward view into features in the top-down view of the vehicle based on the camera parameter vector.

6. The image processing method according to any one of Claims 1-5, wherein the neural network model is trained as follows:
obtaining variation data of the extrinsic parameters of the camera;
obtaining training forward views, training parameters of the camera corresponding to the training forward views, and semantically segmented top-down training ground truth views of the target corresponding to the training forward views;
adjusting the training forward views, the training parameters of the camera, and the training ground truth views based on the variation data; and
training the neural network model using the adjusted training forward views, the training parameters of the camera, and the training ground truth views.

7. The image processing method according to Claim 6, wherein the variation data of the extrinsic parameters of the camera is obtained as follows:
obtaining vibration distribution data by fitting distribution to vibration data representing vibrations of the camera;
selecting specific vibration data of the camera based on the vibration distribution data; and
determining the variation data of the extrinsic parameters of the camera based on the specific vibration data of the camera.

8. A training method for a neural network model, wherein the neural network model receives a forward view of a vehicle and parameters of a camera used to capture the forward view to output a semantically segmented top-down view of a target, the forward view at least showing an area in front of the vehicle, and the parameters including extrinsic parameters of the camera, the training method comprising:
obtaining training forward views, training parameters of the camera corresponding to the training forward views, and semantically segmented top-down training ground truth views of the target corresponding to the training forward views;
training the neural network model based on the training forward views, the training parameters of the camera, and the training ground truth views.

9. The training method according to Claim 8, wherein:
the neural network model comprises a transformer and a semantic segmenter, the transformer being configured to transform features in the forward view into features in the top-down view of the vehicle based on the camera parameters, and the semantic segmenter being configured to perform semantic segmentation on the target based on the features in the top-down view.

10. The training method according to Claim 8, further comprising:
obtaining variation data of the extrinsic parameters of the camera;
adjusting the training forward views, the training parameters of the camera, and the training ground truth views based on the variation data; and
training the neural network model using the adjusted training forward views, the training parameters of the camera, and the training ground truth views.

11. The training method according to Claim 10, wherein the variation data of the extrinsic parameters of the camera is obtained as follows:
obtaining vibration distribution data by fitting distribution to vibration data representing vibrations of the camera;
selecting specific vibration data of the camera based on the vibration distribution data; and
determining the variation data of the extrinsic parameters of the camera based on the specific vibration data of the camera.

12. The training method according to Claim 8, wherein the target includes free space, and the training ground truth views are obtained as follows:
superimposing multiple frames of images obtained by a radar sensor to obtain a superimposed view including dense point cloud data, the multiple frames of images being obtained for a road;
segmenting the superimposed view to obtain a road surface view showing the surface of the road; and
incorporating labels corresponding to non-free space in the road surface view, the labels corresponding to non-free space including: labels of foreground objects and/or labels of occlusion areas corresponding to foreground objects, the foreground objects including non-free space objects incorporated into the road surface view and non-free space objects originally shown in the road surface view.

13. The training method according to Claim 12, wherein the superimposed view with moving targets removed is obtained by superimposing multiple frames of images obtained by the radar sensor.

14. An image processing apparatus, comprising:
an obtaining unit configured to obtain a forward view of a vehicle and parameters of a camera used to capture the forward view, wherein the forward view at least shows an area in front of the vehicle, and the parameters include extrinsic parameters of the camera; and
a processing unit configured to input the forward view and the camera parameters into a neural network model to obtain a semantically segmented top-down view.

15. The image processing apparatus according to Claim 14, wherein:
the neural network model comprises a transformer and a semantic segmenter, the transformer being configured to transform features in the forward view into features in the top-down view of the vehicle based on the camera parameters, and the semantic segmenter being configured to perform semantic segmentation on the target based on the features in the top-down view.

16. The image processing apparatus according to Claim 14, further comprising:
an output unit configured to output the semantically segmented top-down view of the vehicle.

17. The image processing apparatus according to Claim 14, wherein the neural network model further comprises a multilayer perceptron configured to transform the camera parameters into a camera parameter vector,
wherein the transformer transforms features in the forward view into features in the top-down view of the vehicle based on the camera parameter vector.

18. A training apparatus for a neural network model, wherein the neural network model receives a forward view of a vehicle and parameters of a camera used to capture the forward view to output a semantically segmented top-down view of a target, the forward view at least showing an area in front of the vehicle, and the parameters including extrinsic parameters of the camera, the training apparatus comprising:
an obtaining unit configured to obtain training forward views, training parameters of the camera corresponding to the training forward views, and semantically segmented top-down training ground truth views of the target corresponding to the training forward views; and
a training unit configured to train the neural network model based on the training forward views, the training parameters of the camera, and the training ground truth views.

19. The training apparatus according to Claim 18, wherein the neural network model comprises a transformer and a semantic segmenter, the transformer being configured to transform features in the forward view into features in the top-down view of the vehicle based on the camera parameters, and the semantic segmenter being configured to perform semantic segmentation on a target based on the features in the top-down view.

20. The training apparatus according to Claim 18, wherein:
the obtaining unit further obtains variation data of the extrinsic parameters of the camera, and adjusts the training forward views, the training parameters of the camera, and the training ground truth views based on the variation data;
the training unit trains the neural network model using the adjusted training forward views, the training parameters of the camera, and the training ground truth views.

21. The training apparatus according to Claim 20, wherein the obtaining unit obtains the variation data of the extrinsic parameters of the camera as follows:
obtaining vibration distribution data by fitting distribution to vibration data representing vibrations of the camera;
selecting specific vibration data of the camera based on the vibration distribution data; and
determining the variation data of the extrinsic parameters of the camera based on the specific vibration data of the camera.

22. A computer-readable medium storing computer program units, wherein the computer program units, when executed by a processor or computer, cause the processor or computer to execute the image processing method according to any one of Claims 1-7 or the training method for a neural network model according to any one of Claims 8-13.
